# EUROPEAN PATENT APPLICATION

(11) **EP 2 620 794 A1**
(43) Date of publication of application: **31.07.2013**
(21) Application number: 12153066.1
(22) Date of filing: 30.01.2012
(51) Int. Cl.: G02B 6/44

(54) **Device for handling excess lengths of optical fibers or fiber optic cables**

(71) Applicant: CCS Technology, Inc., Wilmington, DE 19803 (US)
(72) Inventor: Latocha, Remigiusz, 92-437 Lodz (PL)
(74) Representative: Sturm, Christoph

(57) **Abstract**

A device for handling excess lengths of optical fibers or fiber optic cables, having a basic body (11) with an outer surface (12) for guiding excess lengths of optical fibers or fiber optic cables, and having down holders (13) projecting from the outer surface (12) of the basic body (11) for securing the excess lengths of optical fibers or fiber optic cables at the basic body (11), whereby the down holders (13) are moveable with respect to the basic body (11) in such a way that the section length of each down holder (13) projecting from the outer surface (12) of the basic body (11) is adjustable. (Fig. 1)

## Description

The present patent application relates to a device for handling excess lengths of optical fibers or fiber optic cables.

US 4,840,449 discloses an optical fiber splice organizer having a bottom wall to which devices for handling excess lengths of optical fibers are fixedly attached. The device for handling excess lengths of optical fibers known from this prior art document comprises a cylindrical structure providing a basic body with an outer surface for guiding excess lengths of optical fibers or fiber optic cables. Excess length of optical fibers or fiber optic cables is also often called over length. Further on, the device for handling excess lengths of optical fibers known from this prior art document comprises spaced fingers providing down holders projecting from the outer surface of the respective basic body for securing the excess lengths of optical fibers or fiber optic cables at the respective basic body. The basic body of the respective device is fixedly attached to the bottom wall of the optical fiber splice organizer and the down holders of the respective device are fixedly attached to basic body so that a defined section length of each down holder projects from the outer surface of the respective basic body.

Similar devices for handling excess lengths of optical fibers or fiber optic cables are known from US 5,167,001 and from US 5,551,144, whereby US 5,551,144 discloses devices with a basic body having a cylindrical shape and devices with a basic body having a semi-cylindrical shape.

Against this background, the present patent application provides a novel device for handling excess lengths of optical fibers or fiber optic cables allowing at the same time an easy and secure handling of the excess lengths.

This is accomplished by the features that the down holders are moveable with respect to the basic body in such a way that the section length of each down holder projecting from the outer surface of the basic body is adjustable. In a first relative position of the down holders relative to the basic body the section length of each down holder projecting from the outer surface of the basic body is relatively short allowing an easy handling, namely an easy and quick installation and removal, of the excess lengths at the outer surface of basic body of the device without any risk to damage the excess lengths. In a second relative position of the down holders relative to the basic body the section length of each down holder projecting from the outer surface of the basic body is relatively long allowing a secure handling of excess lengths at the outer surface of basic body of the device.

Preferably, the basic body comprises a bottom base providing the outer surface for guiding excess lengths of optical fibers or fiber optic cables and a top plate being rotateable with respect to the bottom base, whereby the section length of each down holder projecting from the outer surface of the bottom base increases by rotating the top plate in a first direction, and whereby the section length of each down holder projecting from the outer surface of the bottom base decreases by rotating the top plate in an opposite second direction. Such a design of the device for handling excess length of optical fibers or fiber optic cables is simple and reliable.

According to a preferred further development, a surface of the top plate facing towards the down holders comprises a spiral-like guiding recess into which pins of the down holders protrude in such a way that the section lengths of all down holders projecting from the outer surface of the basic body are commonly adjustable by rotating the top plate with respect to the bottom base. Such a design of the device is simple and reliable.

Exemplary embodiments of the invention will be explained in more detail, without any restriction being imposed, with reference to the drawing, in which:

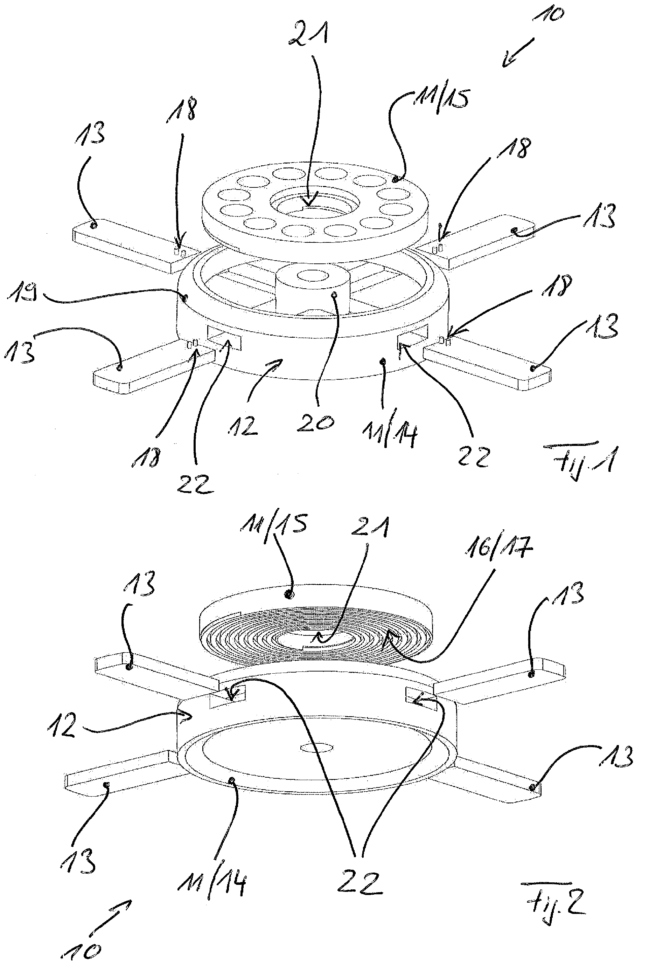

- Figure 1: shows a first exploded, top view of a preferred exemplary embodiment of a device for handling excess length of optical fibers or fiber optic cables;
- Figure 2: shows a second exploded, bottom view of the device of figure 1;
- Figure 3: shows a first cross section through the device of figure 1; and
- Figure 4: shows a second cross section through the device of figure 1.

The present invention relates to a device 10 for handling excess lengths of optical fibers or fiber optic cables like pigtails or patchcords.

The device 10 comprises a basic body 11. The basic body 11 provides an outer surface 12 for guiding excess lengths of optical fibers or fiber optic cables.

The device 10 further comprises down holders 13 projecting from the outer surface 12 of the basic body 11. The down holders 13 secure the excess lengths of optical fibers or fiber optic cables at the basic body 11.

The down holders 13 are moveable with respect to the basic body in such a way that the section length of each down holder 13 projecting from the outer surface 12 of the basic body 11 is adjustable.

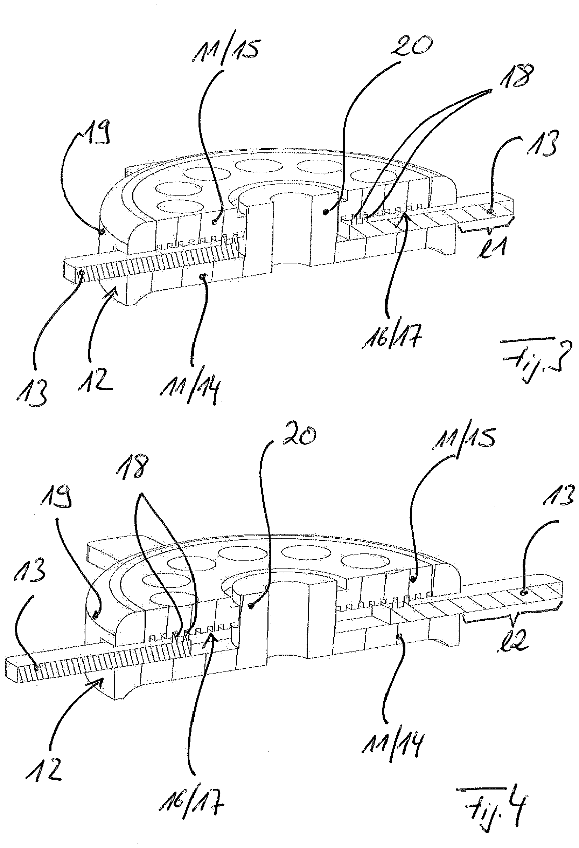

In a first relative position of the down holders 13 relative to the basic body 11 (see Figure 3) the section length 11 of each down holder 13 projecting from the outer surface 12 of the basic body is relative short allowing an easy and quick handling, namely an easy installation and removal, of the excess lengths at the outer surface 12 of basic body 11 of the device 10 without any risk to damage the optical fibers.

In a second relative position of the down holders 13 relative to the basic body 11 (see Figure 4) the section length I2 of each down holder 13 projecting from the outer surface 12 of the basic body 11 is relative long allowing a secure handling of excess lengths at the outer surface 12 of basic body 11 of the device 10.

In the shown preferred embodiment of the device 10 the basic body 11 comprises a bottom base 14 and a top plate 15. The bottom base 14 of the basic body 11 provides the outer surface 12 for guiding excess lengths of optical fibers or fiber optic cables. The outer surface 12 of the basic body 11 provided by the bottom base 14 of the same has in the shown preferred embodiment a circular shape.

The down holders 13 project in radial direction from the outer surface 12 of the basic body 11, whereby the section length of each down holder 13 projecting in radial direction from the outer surface 12 of the basic body 11 is adjustable.

The top plate 15 of the basic body 11 is rotateable with respect to the bottom base 14 of the basic body 11. The section length of each down holder 13 projecting from the outer surface 12 of the bottom base 14 increases by rotating the top plate 15 in a first direction. The section length of each down holder 13 projecting from the outer surface 12 of the bottom base 14 decreases by rotating the top plate 15 in an opposite second direction.

A bottom surface 16 of the top plate 15 of the basic body 11 facing towards to down holders 13 comprises a spiral-like guiding recess 17 into which pins 18 of the down holders 13 protrude.

By rotating the top plate 15 of the basic body 11 with respect to the bottom base 14 of the basic body 11 the section lengths of all down holders 13 projecting from the outer surface 12 of the basic body 11 are commonly adjustable at the same time.

The spiral-like guiding recess 17 is preferably designed as an Archimedes spiral which is also often called arithmetic spiral resulting that the radial movement of the down holders 13 is proportional to the rotating angle of the top plate 15 of the basic body 11 with respect to the bottom base 14 of the basic body 11.

It is also possible to use a different spiral design such that the radial movement of the down holders 13 is non-proportional to the rotating angle of the top plate 15 of the basic body 11 with respect to the bottom base 14 of the basic body 11.

An outer wall 19 of the bottom base 14 of the basic body 11 provides the outer surface 12 for guiding excess lengths of optical fibers or fiber optic cables. In addition to that outer wall 19 the bottom base 14 of the basic body 11 comprises an inner protrusion 20 projecting into an opening 21 of the top plate 15 of the basic body 11 thereby providing a rotation axis for top plate 15 when rotating the same relative to the bottom base 14.

The bottom base 14 of the basic body 11, namely the outer wall 19 of the bottom base 14, has openings 22 for receiving and guiding the down holders 13. The down holders 13 extend in radial direction through the openings 22 from the exterior of the outer wall 19 into the interior defined by the outer wall 19. The pins 18 of the down holders 13 and the spiral-like guiding recess 17 receiving the pins 18 are positioned in the interior defined by the outer wall 19.

The bottom base 14 of the basic body 11 is adapted to be fixedly attached to a wall of a fiber optic distribution device like a patch panel or splice organizer. When the bottom base 14 of the basic body 11 is fixedly attached to a wall of such a fiber optic distribution device, the top plate 15 of the basic body 11 is rotateable with respect to the bottom base 14 of the basic body 11 and with respect to the wall of the fiber optic distribution device to which the bottom base 14 is fixedly attached.

### List of reference numerals

- 10: device
- 11: basic body
- 12: outer surface
- 13: down holder
- 14: bottom base
- 15: top plate
- 16: bottom surface
- 17: spiral-like guiding recess
- 18: pin
- 19: outer wall
- 20: inner protrusion
- 21: opening
- 22: opening

## Claims

1. A device for handling excess lengths of optical fibers or fiber optic cables, having a basic body (11) with an outer surface (12) for guiding excess lengths of optical fibers or fiber optic cables, and having down holders (13) projecting from the outer surface (12) of the basic body (11) for securing the excess lengths of optical fibers or fiber optic cables at the basic body (11), **characterized in that** the down holders (13) are moveable with respect to the basic body (11) in such a way that the section length of each down holder (13) projecting from the outer surface (12) of the basic body (11) is adjustable.

2. The device as claimed in claim 1, **characterized in that** the outer surface (12) of the basic body (11) has circular shape and the down holders (13) project in radial direction from the outer surface (12) of the basic body (11), whereby the section length of each down holder (13) projecting in radial direction from the outer surface (12) of the basic body (11) is adjustable.

3. The device as claimed in claim 1 or 2, **characterized in that** the basic body (11) comprises a bottom base (14) providing the outer surface (12) for guiding excess lengths of optical fibers or fiber optic cables and a top plate (15) being rotateable with respect to the bottom base (14), whereby the section length of each down holder (13) projecting from the outer surface (12) of the bottom base (14) increases by rotating the top plate (15) in a first direction, and whereby the section length of each down holder (13) projecting from the outer surface (12) of the bottom base (14) decreases by rotating the top plate (15) in an opposite second direction.

4. The device as claimed in claim 3, **characterized in that** a surface (16) of the top plate (15) facing towards to down holders (12) comprises a spiral-like guiding recess (17) into which pins (18) of the down holders (13) protrude in such a way that the section lengths of all down holders (12) projecting from the outer surface (12) of the basic body (11) are commonly adjustable by rotating the top plate (15) with respect to the bottom base (14).

5. The device as claimed in claim 3 or 4, **characterized in that** the bottom base (14) of the basic body (11) has an outer wall (19) providing the outer surface (12) for guiding excess lengths of optical fibers or fiber optic cables and an inner protrusion (20) projecting into an opening (21) of the top plate (15).

6. The device as claimed in one of claims 3 to 5, **characterized in that** the bottom base (14) of the basic body (11) is adapted to be fixedly attached to a wall of a fiber optic distribution device like a patch panel or splice organizer.

7. The device as claimed in one of claims 1 to 6, **characterized in that** the outer surface (12) of the basic body (11) comprises openings (22) for receiving and guiding the down holders (13).
